# EUROPÄISCHE PATENTSCHRIFT

(11) **EP 3 126 895 B1**
(45) Veröffentlichungstag und Bekanntmachung des Hinweises auf die Patenterteilung: **06.06.2018**
(21) Anmeldenummer: 15719622.1
(22) Anmeldetag: 07.04.2015
(51) Int. Cl.: G02B 7/04, G02B 25/00

(54) **OKULARAUSZUG FÜR OPTISCHE GERÄTE**
MOVABLE EYEPIECE FOR OPTICAL DEVICES
SYSTÈME OCULAIRE MOBILE POUR UN DISPOSITIF OPTIQUE

(30) Priorität: 03.04.2014 DE 102014206417
(43) Veröffentlichungstag der Anmeldung: 08.02.2017
(73) Patentinhaber: Bresser GmbH, 46414 Rhede (DE)
(72) Erfinder: BOHM, Tassilo, 80798 München (DE)
(74) Vertreter: Maikowski & Ninnemann Patentanwälte Partnerschaft mbB
(86) Internationale Anmeldenummer: PCT/EP2015/057477
(87) Internationale Veröffentlichungsnummer: WO 2015/150571

(56) Entgegenhaltungen:
- US-A- 3 981 564
- US-A1- 2010 104 272

## Beschreibung

Die vorliegende Erfindung betrifft einen Okularauszug für optische Geräte gemäß der Präambel des Anspruchs 1 sowie ein optisches Gerät umfassend einen solchen Okularauszug gemäß Anspruch 16.

### Beschreibung

Unter einem Okularauszug wird allgemein eine Vorrichtung an einem optischen Instrument bzw. Gerät wie z.B. einem Teleskop oder Mikroskop verstanden, mit dessen Hilfe ein scharfes Bild erzeugt wird. Der Okularauszug wird benötigt, um bei Verwendung verschiedener Okulare mittels einer Verschiebung des Okulars den Schärfepunkt justieren zu können.

Der Okularauszug wird typischerweise am optischen Instrument befestigt oder ist fest mit diesem verbunden bzw. ist in das optische Instrument eingebaut. Am offenen Ende des Okularauszuges können ein Okular bzw. ein fotografisches oder fotometrisches Gerät wie z.B. ein Fotoapparat, ein Webcam, ein Spektrometer o.ä. vorgesehen sein. Die Schärfeeinstellung erfolgt über die Bedienung von einer oder mehreren am Okularauszug vorgesehenen Stellrädern, Rändelschrauben oder Motoren, bei deren Betätigung die Position des Okularauszuges entlang der optischen Achse (der Längsachse des Lichtweges) verschoben wird, bis die Position des scharfen Bildes gefunden ist. Manche Okularauszüge besitzen zum Zwecke der genaueren Einstellung auch eine Untersetzung. Je nach Art des optischen Instrumentes existieren verschiedene Okularauszugtypen: Hauptauszug, welcher den gesamten Fokussierweg zurücklegt, oder Hilfsauszug, um eine hochgenaue Fokussierung zu ermöglichen. Die Hauptauszüge sind dabei im Allgemeinen wesentlich länger als die Hilfsauszüge.

Der Okularauszug ist typischerweise am Tubus eines optischen Gerätes wie z.B. eines Teleskops an der Stelle angebracht, wo das gebündelte Licht seinen Brennpunkt aufweist und aus dem optischen Gerät austritt. In Abhängigkeit des Teleskopes kann die Anordnung des Okularauszuges in Abhängigkeit von der Art des Teleskopes variieren. So ist im Falle eines Newton-Teleskops der Okularauszug oben seitlich am Tubus vorgesehen, beim Cassegrain-Teleskop und bei Fernrohren hingegen am hinteren Ende.

Okularauszüge bestehen typischerweise aus einem Okularauszugsrohr, welches in dem Fokussiergrundkörper beweglich gelagert ist. Bei einem solchen klassischen Okularauszug werden zwei runde Rohre ineinander geführt. Problematisch dabei ist die genaue Anpassung des inneren Okularauszugsrohres an die im Gehäuse des Fokussiergrundkörpers vorgesehene zylindrische Öffnung. Ist die Passgenauigkeit des inneren Okularauszugsrohres nicht gegeben, so weist das innere Rohr Spiel auf und wackelt in der Gehäuseöffnung.

Eine Möglichkeit, das Wackeln des inneren Rohres in der Gehäuseöffnung- bzw. bohrung zu reduzieren, besteht z.B. darin, dass innere Rohr mit einer Klemmschraube an eine Seite der zylindrischen Gehäuseöffnung des Fokussiergrundkörpers zu pressen bzw. zu drücken. Im Folgenden soll ohne Einschränkung der Allgemeingültigkeit angenommen werden, dass der Druck von oben (bei Draufsicht auf den Okularauszug) erfolgt. Mit anderen Worten, dass innere Rohr wird von oben hin zur unteren Seite der Gehäuseöffnung gedrückt. Allerdings führt ein derartiger Mechanismus nicht zu einer vollständigen Ruheposition des Innenrohres, vielmehr ist nach wie vor ein Spiel zur rechten und linken Seite des Innenrohres gegeben und das Innenrohr kann nach wie vor in der Gehäuseöffnung bewegt bzw. verwackelt werden. Dieses Problem der Passgenauigkeit kann nur begegnet werden, indem das Innenrohr (Okularauszugsrohr) des Okularauszuges so genau gefertigt wird, das kein merkbares Spiel des Okularauszugsrohres in der Gehäuseöffnung des Fokussiergrundkörpers auftritt. Eine derartige passgenaue Fertigung erfordert eine hohe Präzision und ist aus diesen Gründen mit hohen Kosten verbunden.

Okularauszüge mit polygonalem Querschnitt sind aus der US2010/0104272 A1 oder der US 3,981,564 bekannt. Die derzeit bekannten Okularauszüge sind daher in Bezug auf deren Einsetzbarkeit und Herstellungskosten nicht optimal und verbesserungsbedürftig.
Es ist daher eine Aufgabe der vorliegenden Erfindung, einen Okularauszug für optische Instrumente bereitzustellen, welcher die aus dem Stand der Technik bekannten Nachteile nicht aufweist und gleichzeitig kostengünstig herstellbar ist.
Diese Aufgabe wird mit einem Okularauszug mit den Merkmalen des Anspruchs 1 gelöst.

Ein wesentlicher Aspekt der Erfindung ist dabei, dass die bevorzugt zwei Berührungsflächen des Innenrohrs mit der Gehäuseöffnung, die auch als Außenrohr angesehen werden kann, nicht parallel zueinander stehen, die Normalenvektoren der Berührflächen also nicht linear abhängig sind. So ist eine eindeutig bestimmte, spielfreie Lage des Innenrohrs in der Gehäuseöffnung zwangsläufig gegeben.
Die Seiten der prismatischen Öffnung des Gehäuses und der Mantelfläche des geraden Prismas des Innenohres liegen sich jeweils gegenüber. Entsprechend weist die Innenfläche der Gehäuseöffnung und die Mantelfläche des Innenrohres bevorzugt eine übereinstimmende Prismengeometrie auf. D.h., dass die Gehäuseöffnung eine hexagonale Innenfläche und das Innenrohr eine hexagonale Querschnittsfläche bzw. Mantelfläche aufweisen. In einer Ausführungsform weisen die Gehäuseöffnungsinnenfläche und die Mantelfläche des Innenrohrs eine hexagonale Form bzw. Oberfläche auf. In diesem Falle eines Hexagons erfolgt die Bewegung des Innenrohres im Gehäuse entlang von 2 der 6 Seiten des Hexagons, die sich gegenüberliegen, aber nicht parallel sind. Der Kontakt der Flächen wird mittels eines (noch später im Detail beschriebenen) geeigneten Anpress - oder Andruckelements von einer der anderen Seiten der Mantelfläche des Innenrohres hergestellt, wobei diese Seite nicht parallel zu einer der Kontaktflächen stehen darf. Die Normalen der Flächenvektoren der Anpressseite dürfen also nicht linear abhängig zu einem der beiden Normalenvektoren der Kontaktseiten sein.
In einer weiteren Ausführungsform des vorliegenden Okularauszuges ist der Außendurchmesser des Innenrohrs kleiner (Okularauszugsrohr) als der Innendurchmesser der zylindrischen Gehäuseöffnung. Durch die eindeutig bestimmte Lage des Innenrohrs liegen die zulässigen Toleranzen des Innenrohrs bei sachgerechter Gestaltung um mehrere Größenordnungen über den sonst zulässigen Toleranzen für Okularauszugspassungen. So ist bei der Verwendung des Teleskops für die Astrofotografie bei Teleskopen mit kleiner Blende (z.B. Blende 4=Öffnungsverhältniss f/4) die Anforderung an die Genauigkeit der Passung bei der Verwendung von heute üblichen Sensoren/Kameras im Bereich von 5-30 um (Mikrometer= 1/1000mg). Beim Überschreiten dieses Wertes würde die Kamera so stark verkippen, daß an den Kanten des Bildes eine Unschärfe feststellbar wäre. Im Falle des vorliegenden Okular- bzw. Prismenauszuges kann das Innenrohr dagegen bei sachgerechter Gestaltung durchaus um mehr als einen mm vom Durchmesser des Prismas der Gehäuseöffnung abweichen. Damit können für die Prismen extrudierte Profile verwendet werden, die nicht auf Maß nachbearbeitet werden müssen.

In einer Variante des vorliegenden Okularauszugs ist die hexagonale Mantelfläche, des Innenrohrs in einer einstückigen Form entlang des Umfangs des Innenrohrs ausgebildet. Hierzu kann die Außenschicht des Innenrohres in eine hexagonale Form gebracht bzw. gestaltet werden, z.B. durch Einfräsen der Struktur auf die Außenseite des Innenrohrs oder auch durch preisgünstiges Extrudieren oder Strangpressen der Form.

Es ist ebenfalls möglich, dass die hexagonale Mantelfläche, in Form einer auf dem Innenrohr festhaftenden prismatisch oder regelmäßig polygonal geformten Hülle vorgesehen sein. In einer weiteren Variante des vorliegenden Okularauszuges ist auf der Mantelfläche des Innenrohrs mindestens eine Zahnstange vorgesehen. Diese Zahnstange dient der Bewegung des Innenrohres entlang der Längsachse der Gehäuseöffnung (entlang der Längsachse des Lichtwegs). Hierzu greift die Zahnstange in ein Ritzel, das an einer am Fokussiergrundkörper angeordneten Welle vorgesehen ist. An den Wellenenden sind jeweils bevorzugt geriffelte Stellräder vorgesehen, die bei Betätigung eine Bewegung des Innenrohrs entlang der Längsrichtung der Gehäuseöffnung bewirkt, d.h. ein Ein- und Ausfahren des Okularrohrs.

In einer erfindungsgemässen Variante des Okularauszuges ist an mindestens einer der Seiten der Gehäuseöffnungsinnenfläche mindestens ein Andruckelement für das Innenrohr vorgesehen. Dieses Andruckelement kann in Form von kleinen Plättchen ausgebildet sein, die auch als Andruckplättchen bezeichnet werden können.

In einer Ausführungsform steht das mindestens eine Andruckelement mit mindestens einem auf der Außenseite des Gehäuses vorgesehenen Stellmittel in Wirkverbindung, wobei das Andruckelement durch das mindestens eine Stellmittel radial einstellbar bzw. verstellbar ist. Das genannte auf der äußeren Seite bzw. Außenfläche des Gehäuses vorgesehene Stellmittel kann in Form von mindestens einer Rändelschraube bevorzugt von zwei Rändelschrauben ausgebildet sein. Die Andruckplättchen sind dabei bevorzugt in einer Größe ausgebildet sein, dass der Druck auf das Innenauszugsrohr klein genug ist, so dass sich keine plastische Verformung ergibt. Mit anderen Worten, durch die Andruckplättchen wird der Druck der Schraubenspitze so verteilt, dass kein Loch in das Rohr gedrückt wird. Die Andruckplättchen sind mit dem Stellmittel z.B. Rändelschrauben fest verbunden z.B. mittels Kleben oder Schrauben. Bevorzugt ist jeweils ein Andruckplättchen mit einer Rändelschraube verbunden. Im Falle, dass der Außendurchmesser des Innenrohres kleiner ist als der Innendurchmesser der zylindrischen Gehäuseöffnung (d.h. das Innenrohr weist ein Spiel in der zylindrischen Gehäuseöffnung auf), bewirkt eine Verstellbewegung der Rändelschrauben als Stellmittel einen Druck auf die Andruckplättchen als Andruckelemente. Durch diesen Druck auf das Andruckelement wird das Innenrohr in Richtung auf die gegenüberliegende Innenseite der zylindrischen Gehäuseöffnung (d.h. in Richtung auf die der Seite mit den Rändelschrauben und Andruckplättchen gegenüberliegende Innenseite der zylindrischen Gehäuseöffnung) gedrückt. Durch diese Druckbewegung des Innenrohres wird ein spielfreier (direkter) Kontakt zwischen den hexagonalen Seiten des Innenrohres mit den hexagonalen Seiten der zylindrischen Gehäuseöffnung hergestellt. Es wird somit spielfreier Kontakt der polygonalen (hexagonalen) Seiten des Innenrohres und der Gehäuseöffnung hergestellt. Der spielfreie Kontakt erfolgt bevorzugt an den Seiten der Mantelfläche des Innenrohres und der Innenfläche der Gehäuseöffnung, die den Seiten mit dem Andruckelementen in Form der Andruckplättchen und Stellmittel in Form der Rändelschrauben schräg (in einem Winkel von 120°) gegenüberliegen; siehe auch hierzu die obigen Ausführungen.
In einer weiteren Ausführungsform des vorliegenden Okularauszuges ist vorgesehen, dass die auf der Mantelfläche des Innenrohrs vorgesehene Zahnstange und das an der Gehäuseöffnungsinnenfläche vorgesehene Andruckelement (z.B. in Form der Andruckplättchen) jeweils in einer in der Gehäuseöffnungsinnenfläche vorgesehenen Längsnut angeordnet und ggf. geführt werden. Auch weist die Anordnung der Zahnstange in einer Längsnut den Vorteil auf, dass dadurch zusätzlich ein Verdrehen des Innenrohrs in der Gehäuseöffnung verhindert wird.

In einer weiteren Ausführungsform des vorliegenden Okularauszuges ist vorgesehen, dass die auf der Mantelfläche des Innenrohrs vorgesehene Zahnstange und das an der Gehäuseöffnungsinnenfläche vorgesehene Andruckelement z.B. in Form der Andruckplättchen an sich gegenüberliegenden Seiten der prismatischen Außenfläche des Innenrohres vorgesehen sind. Entsprechend sind die Zahnstange und das Andruckelement in einem Winkel von 180° zueinander angeordnet. Es ist aber auch vorstellbar, dass der Kontakt zwischen der Achse des Stellrades und dem Okularauszugsinnenrohr nur durch Anpressen über Reibung erfolgt, wie z.B. im Fall der sogenannten Crayford-Auszüge.

Es ist weiterhin vorgesehen, dass an mindestens einer Seite der polygonalen Gehäuseinnenfläche und/oder an mindestens einer Seite der polygonalen Außenfläche des Innenrohres mindestens ein Gleitbelag zur Verschleißvermeidung vorgesehen ist. Neben der Verschleißvermeidung hat die Verwendung von Gleitbelägen auch den Effekt, dass bedingt durch die Dicke der Gleitbeläge zwei identische Polygone bzw. Prismen verwenden können.

So ist es z.B. möglich auf einer oder mehreren Seiten der hexagonalen Innenfläche des Gehäuses und/oder auf einer oder mehreren Seiten der der hexagonalen Außenfläche des Innenrohres jeweils einen Gleitbelag vorzusehen. Insbesondere ist es bevorzugt im Falle einer hexagonalen Geometrie mindestens 2 Gleitbeläge, bevorzugt 4 Gleitbeläge, an 2 Seiten, bevorzugt 4 Seiten, des Hexagons vorzusehen. Dabei sind an den Seiten des Hexagons, die zu den Seiten des Innenrohres mit Andruckelement (in Form der Andruckplättchen) und Zahnstange korrespondieren, keine Gleitbeläge vorgesehen. Der mindestens eine zum Einsatz kommende Gleitbelag kann dabei aus Kunststoff wie z.B. Polytetrafluorethylen oder einem Metall wie z.B. Aluminium bestehen.

Es ist weiterhin vorgesehen, dass die zylindrische Gehäuseöffnung Teil eines Fokussierungsgrundkörpers zur Befestigung des Okularauszuges an dem mindestens einem optischen Gerät ist. Der Fokussierungsgrundkörper umfasst dabei neben der zylindrischen Gehäuseöffnung mindestens einen Abschnitt (z.B. in Form einer Platte) zur festen Verbindung des Okularauszuges am optischen Gerät. Die feste Verbindung des Okularauszuges am optischen Gerät erfolgt bevorzugt unter Verwendung von geeigneten Befestigungsmitteln z.B. Schrauben. Darüber hinaus ist an dem Fokussierungsgrundkörper mindestens eine Welle vorgesehen, an deren Enden mindestens ein Stellrad, bevorzugt zwei Stellräder an den beiden gegenüberliegenden Wellenenden vorgesehen sind. Bei Betätigung des mindestens einen Stellrades wird eine Drehbewegung über die Welle und ein auf der Welle vorgesehenen Ritzel, dass mit der Zahnstange am Innenrohr in Wirkverbindung steht, in eine Längsbewegung des Innenrohrs umgesetzt.

In einer weiteren Variante des vorliegenden Okularauszuges ist des Weiteren vorgesehen, dass an der sichtbaren Öffnung des Innenrohres eine ringförmige Abdeckung angeordnet ist, die sich entlang und auf der Umfangsrichtung des Innenrohres erstreckt und zumindest die polygonale (z.B. hexagonale) Formgebung des Innenrohres und des Gehäuses abdeckt. Die Blende zur Anbringung an der sichtbaren Öffnung des Innenrohres dient somit der Abdeckung der polygonalen Formgebung des Okularauszugsrohres.

Die vorliegende Aufgabe wird ebenfalls durch ein optisches Gerät umfassend einen Okularauszug gemäß der oben beschriebenen Art gelöst.

Der vorliegende Okularauszug wird dabei bevorzugt an einen Teleskop oder auch einem Mikroskop verwendet, und ermöglicht eine kostengünstige Herstellung solch einen optischen Instrumentes.

Die Erfindung wird im Folgenden ausführlicher anhand eines Ausführungsbeispiels unter Verwendung der Zeichnungen der Figuren beschrieben.

Es zeigen:
- Fig. 1: eine Schrägsicht eines Okularauszuges gemäß einer ersten Ausführungsform,
- Fig. 2: eine Draufsicht auf einen Okularauszug aus Fig. 1,
- Fig. 3: eine Seitenansicht der in Fig. 1 gezeigten Ausführungsform des Okularauszuges, und
- Fig. 4: eine Schrägsicht auf das Gehäuse und die Gehäuseöffnung ohne Okularauszugsrohr.

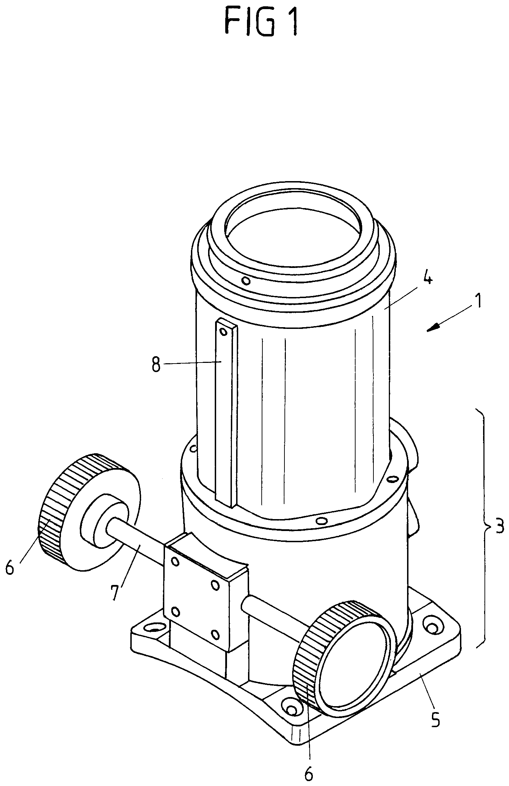

Aus Figur 1 ist in einer Schrägansicht von oben ein Okularauszug 1 zur Anwendung an einem optischen Instrument wie einem Teleskop oder Mikroskop dargestellt. Der Okularauszug 1 umfasst eine zylindrische Gehäuseöffnung 2, welches Teil eines Fokussiergrundkörpers 3 ist. Die Innenfläche der Gehäuseöffnung 2 ist im Ausführungsbeispiel der Figur 1 hexagonal ausgebildet. In der Gehäuseöffnung 2 ist ein prismatisches Innenrohr 4 als Okularauszugsruhr vorgesehen, wobei das Innenrohr 4 in der Gehäuseöffnung 2 entlang der Längsachse der Gehäuseöffnung 2 verschiebbar ist. Das Innenrohr 4 weist eine hexagonale Mantelfläche bzw. Grundfläche auf. Die Seiten der hexagonalen Mantelfläche des Innenrohrs 4 und die Seiten der hexagonalen Innenfläche der Gehäuseöffnung 2 sind jeweils gegenüberliegend angeordnet, sodass eine Verschiebung bzw. Bewegung des Innenrohrs 4 in der Gehäuseöffnung 2 ermöglicht wird.

Im vorliegenden Beispiel weist das Innenrohr 4 einen kleineren Durchmesser als der Innendurchmesser der Gehäuseöffnung 2, sodass das Innenrohr 4 in der Gehäuseöffnung 2 mit einem Spiel gelagert ist.

Der Fokussiergrundkörper 3 umfasst neben der Gehäuseöffnung 2 eine Platte zur Befestigung des Okularauszuges an dem optischen Instrument. Darüber hinaus sind in der Ausführungsform der Figur 1 zwei Stellräder 6 vorgesehen, die an den Enden einer Welle 7 befestigt sind. Diese Welle 7 steht wiederum im Kontakt mit einer an der Außenseite des Innenrohrs 4 vorgesehenen Zahnstange 8. Die Wirkverbindung zwischen der Welle 7 und der Zahnstange 8 wird durch ein Ritzel (nicht gezeigt) bewirkt, über welches die Drehbewegung der Stellräder auf die Zahnstange 8 und somit in eine Bewegung des Innenrohrs 4 in der Gehäuseöffnung 2 umgesetzt wird.

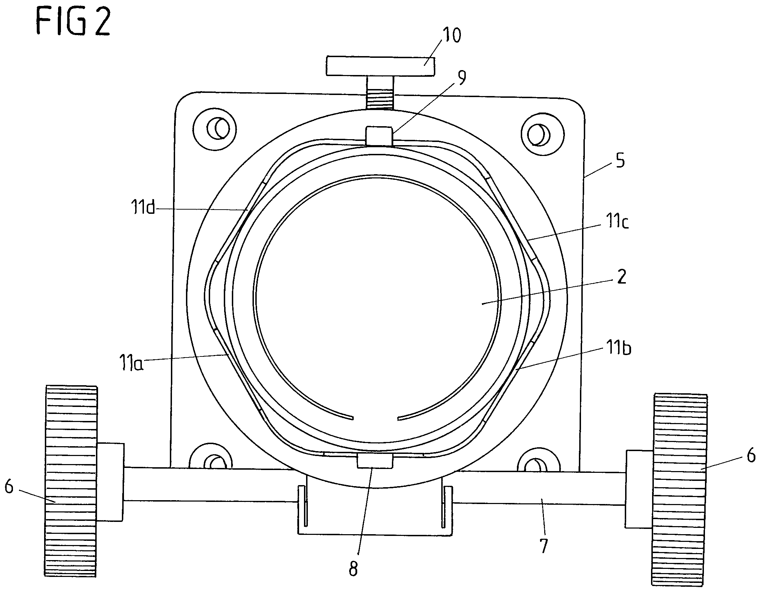

In der Draufsicht auf den Okularauszug in Figur 2 ist die Anordnung des Innenrohrs 4 mit der hexagonalen Außenfläche innerhalb der Gehäuseöffnung 2 mit der hexagonalen Innenfläche erkennbar. Neben der Zahnstange 8, die auf einer der hexagonalen Seiten des Innenrohres 4 angeordnet ist, ist gegenüberliegend (in einem Winkel von 180°) ein Andruckelement 9 in Form eines Andruckplättchens vorgesehen.

Dieses Andruckplättchen 9 wird durch ein Stellmittel in Form einer Rändelschraube 10 (angeordnet auf der Außenseite des Gehäuses und in Wirkverbindung mit dem Andruckplättchen 9) auf die Außenseite des Innenrohrs 4 gedrückt. Durch diese Druckbewegung auf das Innenrohr 4 hervorgerufen durch eine Betätigung der Rändelschraube 10 und des Andruckelementes 9 wird das Innenrohr 4 auf die gegenüberliegende Seite der Gehäuseöffnung 2 gedrückt. Durch diese Druck- bzw. Pressbewegung wird auch ein Kontakt des Innenrohres 4 mit den Seiten 11a, 11b der Gehäuseöffnung 2 hervorgerufen, die schräg (d.h. in einem Winkel von 120°) dem Andruckplättchen gegenüberliegen (d.h. die hexagonalen Seiten 11a, 11b, die links und rechts unten in der Draufsicht erkennbar sind).

Durch diese Druckbewegung wird ein spielfreier Kontakt zwischen dem hexagonalen Innenrohr und der hexagonalen Gehäuseöffnungsinnenfläche hergestellt. Entsprechend wird eine spielfreie und trotzdem sehr toleranzfreundliche Führung des Okularauszugsrohres in der Gehäuseöffnung 2 bewirkt.

Die Zahnstange 8, die auf der Außenfläche des Innenrohres 4 vorgesehen ist, wird in einer Längsnut geführt, welche in die Innenseite der Gehäuseöffnung 2 eingefügt ist. Ebenso wird das Andruckelement 9, welches durch die Betätigung der Rändelschraube 10 radial verstellbar in Richtung des Innenrohres 4 ist, in einer ebenfalls auf der Gehäuseinnenseite vorgesehenen Längsnut formschlüssig geführt. Eine formschlüssige Führung ist allerdings nicht zwingend notwendig. Eine Verhinderung der Rotation des Innenrohres 4 ist aufgrund der Bestimmtheit des Innenrohres 4 im Raum nicht zwingend notwendig.

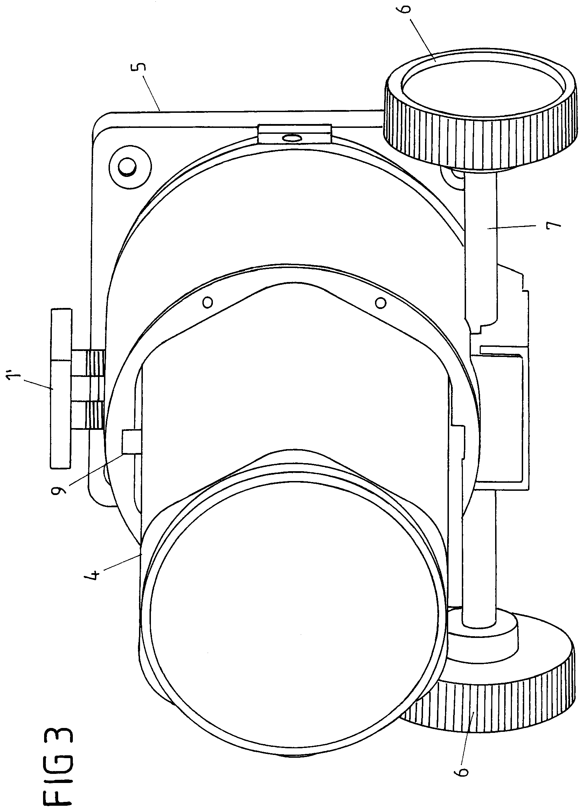

In Figur 3 ist die spielfreie und toleranzfreundliche Führung des vorliegenden Okularauszugsrohres 4 (Innenrohr) in der Gehäuseöffnung 2 deutlich erkennbar. In der in Fig. 3 gezeigten Ausführungsform werden zwei Rändelschrauben 10 verwendet, die bei Betätigung das auf der Innenseite der Gehäuseöffnung 2 vorgesehene Andruckelement (Andruckplättchen) 9 drücken und dieses Andruckelement 9 wiederum einen Pressdruck auf das Innenrohr 4 ausübt. Das Innenrohr 4 wird entsprechend nach unten, gegen die Gehäuseinnenwand 2 gedrückt und fixiert, sodass das Innenrohr 4 kein Spiel in der Gehäuseöffnung 2 aufweist.

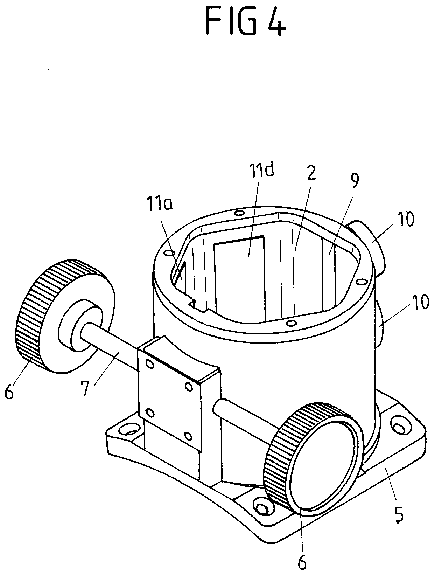

Figur 4 zeigt eine Draufsicht auf ein Gehäuse mit der Gehäuseöffnung 2 ohne Okularauszugsrohr bzw. Innenrohr 4. Die hexagonale Ausformung der Gehäuseöffnung 2 ist hier deutlich erkennbar. Auf der Innenseite der Gehäuseöffnung 2 sind zudem die jeweils mit einem Gleitbelag versehenen hexagonalen Seiten 11, 11d sowie das Andruckelement 9 erkennbar.

Durch die hexagonale Ausbildung von Innenrohr 4 und Gehäuseöffnung 2 ist eine toleranzfreundliche Führung des Okularauszugsrohres 4 möglich, die auch bei nicht passgenauer Fertigung zu einer kostengünstigen Herstellung von Okularauszugsrohren angewendet werden kann.

## Patentansprüche

1. Okularauszug (1) für optische Geräte, insbesondere für Teleskope und Mikroskope, umfassend mindestens ein Gehäuse mit mindestens einer prismatischen Öffnung (2) als Teil von mindestens einem Fokussiergrundkörper und mindestens ein Innenrohr (4) mit prismatischer Mantelfläche als Okularauszugsrohr, wobei das Innenrohr (4) im Gehäuse entlang der Längsachse der Öffnung (2) des Gehäuses verschiebbar ist,
**dadurch gekennzeichnet,**
**dass** die mindestens eine prismatische Gehäuseöffnung (2) eine Öffnungsinnenfläche mit einer hexagonalen Oberfläche und das mindestens eine Innenrohr (4) eine Mantelfläche mit einer hexagonalen Oberfläche aufweisen, wobei das Innenrohr (4) in der Gehäuseöffnung (2) entlang von zwei der sechs Seiten des jeweiligen Hexagons von Innenrohr und Gehäuseöffnung verschiebbar ist, wobei die zwei Seiten des jeweiligen Hexagons von Innenrohr und Gehäuseöffnung miteinander in Kontakt stehen und die Kontaktflächen zwischen Innenrohr und Gehäuseöffnung bilden, wobei die jeweiligen zwei Seiten des Hexagons von Innenrohr und Gehäuseöffnung, die die Kontaktflächen bilden, sich im Hexagon gegenüberliegen, aber nicht parallel zueinander sind, und
**dass** an mindestens einer weiteren Seite des Hexagons der Gehäuseöffnungsinnenfläche mindestens ein Andruckelement (9) für das Innenrohr (4) vorgesehen ist, wobei das mindestens eine Andruckelement (9) auf der Seite des Hexagons der Gehäuseöffnungsinnenfläche vorgesehen ist, die in einem Winkel von 120° den zwei Kontaktflächen gegenübersteht.

2. Okularauszug nach Anspruch 1, **dadurch gekennzeichnet**, der Außendurchmesser des Innenrohrs (4) kleiner ist als der Innendurchmesser der prismatischen Gehäuseöffnung (2).

3. Okularauszug nach einem der vorhergehenden Ansprüche, **dadurch gekennzeichnet, dass** die hexagonale Mantelfläche, des Innenrohrs (4) in einer einstückigen Form entlang des Umfangs des Innenrohrs ausgebildet ist.

4. Okularauszug nach einem der Ansprüche 1 bis 3, **dadurch gekennzeichnet, dass** die hexagonale Mantelfläche des Innenrohrs (4) in Form einer auf dem Innenrohr festhaftenden prismatisch geformten Hülle vorgesehen ist.

5. Okularauszug nach einem der vorhergehenden Ansprüche, **dadurch gekennzeichnet, dass** auf der Mantelfläche des Innenrohrs (4) mindestens eine Zahnstange (8) vorgesehen ist.

6. Okularauszug nach einem der vorhergehenden Ansprüche , **dadurch gekennzeichnet, dass** das mindestens eine Andruckelement (9) mit mindestens einem auf der Außenseite des Gehäuses vorgesehenen Stellmittel (10) in Wirkverbindung steht und durch das mindestens eine Stellmittel (10) radial verstellbar ist.

7. Okularauszug nach Anspruch 5, **dadurch gekennzeichnet, dass** die auf der Mantelfläche des Innenrohrs (4) vorgesehene Zahnstange (8) und das an der Gehäuseöffnungsinnenfläche vorgesehene Andruckelement (9) jeweils in einer in der Gehäuseöffnungsinnenfläche vorgesehenen Längsnut angeordnet werden.

8. Okularauszug nach Anspruch 5, **dadurch gekennzeichnet, dass** die auf der Mantelfläche des Innenrohrs (4) vorgesehene Zahnstange (8) und das an der Gehäuseöffnungsinnenfläche vorgesehene Andruckelement (9) an sich gegenüberliegenden Seiten der hexagonalen Mantelfläche des Innenrohres (4) vorgesehen sind.

9. Okularauszug nach einem der vorhergehenden Ansprüche, **dadurch gekennzeichnet, dass** an mindestens einer Seite der hexagonalen Gehäuseöffnungsinnenfläche und/oder an mindestens einer Seite der hexagonalen Mantelfläche des Innenrohres (4) mindestens ein Gleitbelag vorgesehen ist.

10. Okularauszug nach Anspruch 9, **dadurch gekennzeichnet, dass** der mindestens eine Gleitbelag aus Kunststoff, insbesondere PTF, oder einem Metall, insbesondere Aluminium besteht.

11. Okularauszug nach einem der vorhergehenden Ansprüche, **dadurch gekennzeichnet, dass** das Gehäuse Teil eines Fokussierungsgrundkörpers zur Befestigung des Okularauszuges an dem mindestens einem optischen Gerät ist.

12. Okularauszug nach einem der vorhergehenden Ansprüche, **dadurch gekennzeichnet, dass** an der sichtbaren Öffnung des Innenrohres (4) eine ringförmige Abdeckung vorgesehen ist, die sich entlang und auf der Umfangsrichtung des Innenrohres (4) erstreckt und zumindest die hexagonale Formgebung des Innenrohres (4) abdeckt.

13. Optisches Gerät umfassend einen Okularauszug nach einem der vorhergehenden Ansprüche.

## Claims

1. Focuser (1) for optical appliances, in particular for telescopes and microscopes, comprising at least one housing with at least one prismatic opening (2) as part of at least one focusing main body, and at least one inner tube (4) with a prismatic lateral face as focuser drawtube, wherein the inner tube (4) is movable in the housing along the longitudinal axis of the opening (2) of the housing, **characterized in that** the at least one prismatic housing opening (2) has an opening inner face with a hexagonal surface and the at least one inner tube (4) has a lateral face with a hexagonal surface, wherein the inner tube (4) is movable in the housing opening (2) along two of the six sides of the respective hexagon of inner tube and housing opening, wherein the two sides of the respective hexagon of inner tube and housing opening are in contact with each other and form the contact faces between inner tube and housing opening, wherein the respective two sides of the hexagon of inner tube and housing opening that form the contact faces lie opposite each other in the hexagon but are not parallel to each other, and **in that** at least one pressure element (9) for the inner tube (4) is provided on at least one further side of the hexagon of the inner face of the housing opening, wherein the at least one pressure element (9) is provided on that side of the hexagon of the inner face of the housing opening lying at an angle of 120° to the two contact faces.

2. Focuser according to Claim 1, **characterized in that** the external diameter of the inner tube (4) is smaller than the internal diameter of the prismatic housing opening (2).

3. Focuser according to one of the preceding claims, **characterized in that** the hexagonal lateral face of the inner tube (4) is configured in a one-piece form along the circumference of the inner tube.

4. Focuser according to one of Claims 1 to 3, **characterized in that** the hexagonal lateral face of the inner tube (4) is provided in the form of a prismatically shaped sleeve adhering to the inner tube.

5. Focuser according to one of the preceding claims, **characterized in that** at least one toothed rack (8) is provided on the lateral face of the inner tube (4).

6. Focuser according to one of the preceding claims, **characterized in that** the at least one pressure element (9) is operatively connected to at least one adjusting means (10) provided on the outer side of the housing and is radially adjustable by the at least one adjusting means (10).

7. Focuser according to Claim 5, **characterized in that** the toothed rack (8) provided on the lateral face of the inner tube (4) and the pressure element (9) provided on the inner face of the housing opening are each arranged in a longitudinal groove provided in the inner face of the housing opening.

8. Focuser according to Claim 5, **characterized in that** the toothed rack (8) provided on the lateral face of the inner tube (4) and the pressure element (9) provided on the inner face of the housing opening are provided on mutually opposite sides of the hexagonal lateral face of the inner tube (4).

9. Focuser according to one of the preceding claims, **characterized in that** at least one slide lining is provided on at least one side of the hexagonal inner face of the housing opening and/or on at least one side of the hexagonal lateral face of the inner tube (4).

10. Focuser according to Claim 9, **characterized in that** the at least one slide lining is made of plastic, in particular PTF, or a metal, in particular aluminium.

11. Focuser according to one of the preceding claims, **characterized in that** the housing is part of a focusing main body for securing the focuser on the at least one optical appliance.

12. Focuser according to one of the preceding claims, **characterized in that** a ring-shaped cover is provided at the visible opening of the inner tube (4), which cover extends along the circumferential direction of the inner tube (4) and covers at least the hexagonal shape of the inner tube (4).

13. Optical appliance comprising a focuser according to one of the preceding claims.

## Revendications

1. Porte-oculaire (1) pour appareils optiques, notamment pour télescopes et microscopes, comprenant au moins un boîtier pourvu d'au moins une ouverture prismatique (2) en tant que partie d'au moins un corps de base de mise au point et au moins un tube intérieur (4) pourvu d'une enveloppe prismatique en tant que tube porte-oculaire, le tube intérieur (4) pouvant coulisser dans le boîtier le long de l'axe longitudinal de l'ouverture (2) du boîtier,
**caractérisé en ce**
**que** l'au moins une ouverture du boîtier prismatique (2) possède une surface intérieure d'ouverture ayant une surface hexagonale et l'au moins un tube intérieur (4) une enveloppe ayant une surface hexagonale, le tube intérieur (4) pouvant coulisser dans l'ouverture de boîtier (2) le long de deux des six côtés de l'hexagone respectif du tube intérieur et de l'ouverture de boîtier, les deux côtés de l'hexagone respectif du tube intérieur et de l'ouverture de boîtier étant en contact les uns avec les autres et formant les surfaces de contact entre le tube intérieur et l'ouverture de boîtier, les deux côtés respectifs de l'hexagone du tube intérieur et de l'ouverture de boîtier qui forment les surfaces de contact étant mutuellement opposés dans l'hexagone, mais non parallèles les uns aux autres, et
**qu'**au moins un élément presseur (9) pour le tube intérieur (4) est prévu sur au moins un côté supplémentaire de l'hexagone de la surface intérieure d'ouverture de boîtier, l'au moins un élément presseur (9) étant prévu sur le côté de l'hexagone de la surface intérieure d'ouverture de boîtier qui est à l'opposé des deux surfaces de contact selon un angle de 120°.

2. Porte-oculaire selon la revendication 1, **caractérisé en ce que** le diamètre extérieur du tube intérieur (4) est inférieur au diamètre intérieur de l'ouverture de boîtier prismatique (2).

3. Porte-oculaire selon l'une des revendications précédentes, **caractérisé en ce que** l'enveloppe hexagonale du tube intérieur (4) est configurée en une forme d'un seul tenant le long du pourtour du tube intérieur.

4. Porte-oculaire selon l'une des revendications 1 à 3, **caractérisé en ce que** l'enveloppe hexagonale du tube intérieur (4) est réalisée sous la forme d'une gaine façonnée prismatique qui adhère sur le tube intérieur.

5. Porte-oculaire selon l'une des revendications précédentes, **caractérisé en ce qu'**au moins une crémaillère (8) se trouve sur l'enveloppe du tube intérieur (4).

6. Porte-oculaire selon l'une des revendications précédentes, **caractérisé en ce que** l'au moins un élément presseur (9) se trouve en liaison fonctionnelle avec au moins un moyen de réglage (10) qui se trouve sur le côté extérieur du boîtier et peut être positionné dans le sens radial par le biais de l'au moins un moyen de réglage (10).

7. Porte-oculaire selon la revendication 5, **caractérisé en ce que** la crémaillère (8) qui se trouve sur l'enveloppe du tube intérieur (4) et l'élément presseur (9) qui se trouve sur la surface intérieure de l'ouverture de boîtier sont respectivement disposés dans une rainure longitudinale qui se trouve sur la surface intérieure de l'ouverture de boîtier.

8. Porte-oculaire selon la revendication 5, **caractérisé en ce que** la crémaillère (8) qui se trouve sur l'enveloppe du tube intérieur (4) et l'élément presseur (9) qui se trouve sur la surface intérieure de l'ouverture de boîtier sont situés sur des côtés mutuellement opposés de l'enveloppe hexagonale du tube intérieur (4).

9. Porte-oculaire selon l'une des revendications précédentes, **caractérisé en ce qu'**au moins un revêtement de glissement se trouve sur au moins un côté de la surface intérieure hexagonale de l'ouverture de boîtier et/ou sur au moins un côté de l'enveloppe hexagonale du tube intérieur (4).

10. Porte-oculaire selon la revendication 9, **caractérisé en ce que** l'au moins un revêtement de glissement se compose d'une matière plastique, notamment de PTF, ou d'un métal, notamment de l'aluminium.

11. Porte-oculaire selon l'une des revendications précédentes, **caractérisé en ce que** le boîtier est une partie d'un corps de base de mise au point servant à la fixation du porte-oculaire à l'au moins un appareil optique.

12. Porte-oculaire selon l'une des revendications précédentes, **caractérisé en ce qu'**un cache de forme annulaire se trouve au niveau de l'ouverture visible du tube intérieur (4), lequel s'étend le long et dans le sens du pourtour du tube intérieur (4) et recouvre au moins le façonnage hexagonal du tube intérieur (4).

13. Appareil optique comprenant un porte-oculaire selon l'une des revendications précédentes.
